# EUROPÄISCHE PATENTSCHRIFT

(11) **EP 1 161 717 B1**
(45) Veröffentlichungstag und Bekanntmachung des Hinweises auf die Patenterteilung: **31.05.2006**
(21) Anmeldenummer: 00926741.0
(22) Anmeldetag: 17.03.2000
(51) Int. Cl.: G06F 1/00, G11B 20/00

(54) **VERFAHREN ZUR SICHERUNG VON DATEN IN EINEM TRAGBAREN MASSENSPEICHER GEGEN UNAUTORISIERTE VERVIELFÄLTIGUNG**
METHOD OF SECURING DATA IN A PORTABLE MASS MEMORY AGAINST UNAUTHORIZED DUPLICATION
PROCEDE POUR PROTEGER LES DONNEES DANS UNE MEMOIRE DE MASSE PORTABLE CONTRE UNE REPRODUCTION NON AUTORISEE

(30) Priorität: 18.03.1999 DE 19912224
(43) Veröffentlichungstag der Anmeldung: 12.12.2001
(73) Patentinhaber: SCM Microsystems GmbH, 85737 Ismaning (DE)
(72) Erfinder: NEIFER, Wolfgang, D-85354 Freising (DE)
(74) Vertreter: Degwert, Hartmut
(86) Internationale Anmeldenummer: PCT/EP2000/002414
(87) Internationale Veröffentlichungsnummer: WO 2000/055707

(56) Entgegenhaltungen:
- EP-A- 0 191 162
- EP-A- 0 302 710
- EP-A- 0 844 550
- WO-A-96/35987
- DE-U- 29 802 270
- DE-U- 29 805 046

## Beschreibung

Die Erfindung betrifft ein Verfahren zur Sicherung von Daten in einem tragbaren Massenspeicher gegen unautorisierte Vervielfältigung und ein Wiedergabesystem zur Durchführung des Verfahrens.

Die kommerzielle Verbreitung von multimedialen Inhalten und Software geschieht ganz überwiegend auf Datenträgern, die nur einmal beschreibbar sind und mit dem darauf gespeicherten Inhalt das Handelsprodukt bilden. Die kommerzielle Verbreitung der Inhalte losgelöst von solchen Datenträgern wäre prinzipiell möglich, beispielsweise durch Fernzugriff auf Netzwerke mit Bezahlfunktion, scheitert jedoch am mangelnden Schutz gegen unautorisierte Vervielfältigung.

Aus der Gebrauchsmuster-Schrift DE 298 02 270 U1 ist ein multimediales System mit einer Basisstation, einer tragbaren Bedieneinrichtung und einem Kommunikationsmodul zur Verwendung in dem multimedialen System bekannt. Dort wird die Kommunikation zwischen den besagten Komponenten bzw. zwischen dem Anwender und dem multimedialen System beschrieben, und es werden Möglichkeiten der Datensicherheit, wie zum Beispiel eine auf einer Chipkarte implementierte Zugriffskontrolle auf eine Bestell- und Bezahlfunktion, genannt, ohne jedoch dabei explizit ein Verfahren zur Sicherung von Daten zu offenbaren.

Durch die Erfindung wird ein Verfahren zur Sicherung von Daten in einem tragbaren Massenspeicher gegen unautorisierte Vervielfältigung zur Verfügung gestellt, das mit geringem Aufwand und verfügbarer Technologie durchgeführt werden kann. Nach dem erfindungsgemäßen Verfahren werden die Daten in dem Massenspeicher zunächst in verzerrter Form gespeichert. In einem Wiedergabesystem für die Daten wird wenigstens ein SAM-Modul (Safe Access Modul, d.h. Modul für gesicherten Zugriff) verwendet, auf dem ein persönlicher Identitätscode eines autorisierten Benutzers gespeichert ist. Die zur Entzerrung der Daten benötigten Entzerrungs-Schlüssel werden auf dem SAM-Modul des autorisierten Benutzers gespeichert. Den Daten wird ein Autorisierungscode zugeordnet, der auf dem SAM-Modul abgelegt wird. Auf dem SAM-Modul wird sodann ein mittels des persönlichen Identitätscodes verschlüsselter Autorisierungscode gebildet. Dieser verschlüsselte Autorisierungscode wird mit den verzerrten Daten auf dem Massenspeicher abgelegt. Vor einer Wiedergabe der Daten wird der verschlüsselte Autorisierungscode mittels des persönlichen Identitätscode vom SAM-Modul entschlüsselt. Der entschlüsselte Autorisierungscode wird dann mit dem auf dem SAM-Modul (unverschlüsselt) abgelegten Autorisierungscode verglichen. Die Entzerrung der vom Massenspeicher ausgelesenen Daten mittels der Entzerrungsschlüssel wird dann nur bei übereinstimmenden Autorisierungscodes freigegeben. Durch dieses mit einfachster Hardware durchführbare Verfahren erfolgt eine Personalisierung der Daten auf dem Massenspeicher. Für die unverzerrte Wiedergabe der Daten wird ein Autorisierungscode benötigt, der nur über den SAM-Modul des autorisierten Benutzers gewonnen werden kann, weil er mit dem persönlichen Identitätscode des autorisierten Benutzers verknüpft ist.

In Weiterbildung des Verfahrens werden auch die für die Entzerrung der Daten benötigten Entzerrungsschlüssel mit auf dem SAM-Modul gespeicherten persönlichen Daten des autorisierten Benutzers chiffriert, so daß sie nur unter Verwendung des zutreffenden SAM-Moduls dechiffriert werden können.

In weiterer Ausgestaltung des Verfahrens werden die Daten bei der Wiedergabe über ein geeignetes Wiedergabesystem unlösbar mit einer persönlichen Kennzeichnung des autorisierten Benutzers ausgegeben. Die persönliche Kennzeichnung kann in einem Logo oder dergleichen bestehen, das bei Bilddaten in einer Ecke des Bildfeldes angezeigt wird.

Das erfindungsgemäße Wiedergabesystem zur Durchführung des Verfahrens enthält im wesentlichen: Ein Lesemodul zur Aufnahme des Massenspeichers, bei dem es sich vorzugsweise um ein vom Anwender beschreibbares Medium handelt, beispielsweise eine miniaturisierte Festplatte oder eine vom Benutzer beschreibbare optische Speicherplatte; einen Kartenleser für das SAM-Modul; eine Daten-Aufbereitungselektronik zum Entzerren der aus dem Massenspeicher gelesenen Daten; und ein Ausgabegerät für die entzerrten Daten. Um Daten über ein entferntes Netzwerk, beispielsweise aus dem Internet, beziehen zu können, ist vorzugsweise zusätzlich ein Bezahlsystem für den bedingten Zugang zu einem Datenanbieter über das entfernte Netzwerk vorgesehen. Das Bezahlsystem basiert auf einem Chipkartenleser, der bei der bevorzugten Ausführungsform als steckbare PC-Karte im PCMCIA-Format ausgebildet ist.

Weitere Vorteile und Merkmale der Erfindung ergeben sich aus der folgenden Beschreibung und aus der Zeichnung, auf die Bezug genommen wird. In der Zeichnung zeigen:
Figur 1 ein Blockschaltbild eines Wiedergabesystems zur Durchführung des erfindungsgemäßen Verfahrens;
Figur 2 einen Algorithmus zur Personalisierung der Daten im Massenspeicher nach dem erfindungsgemäßen Verfahren;
Figur 3 einen Algorithmus zur Überprüfung der Wiedergabe-Autorisierung nach dem erfindungsgemäßen Verfahren;
Figur 4 den Wiedergabeprozeß nach dem erfindungsgemäßen Verfahren.

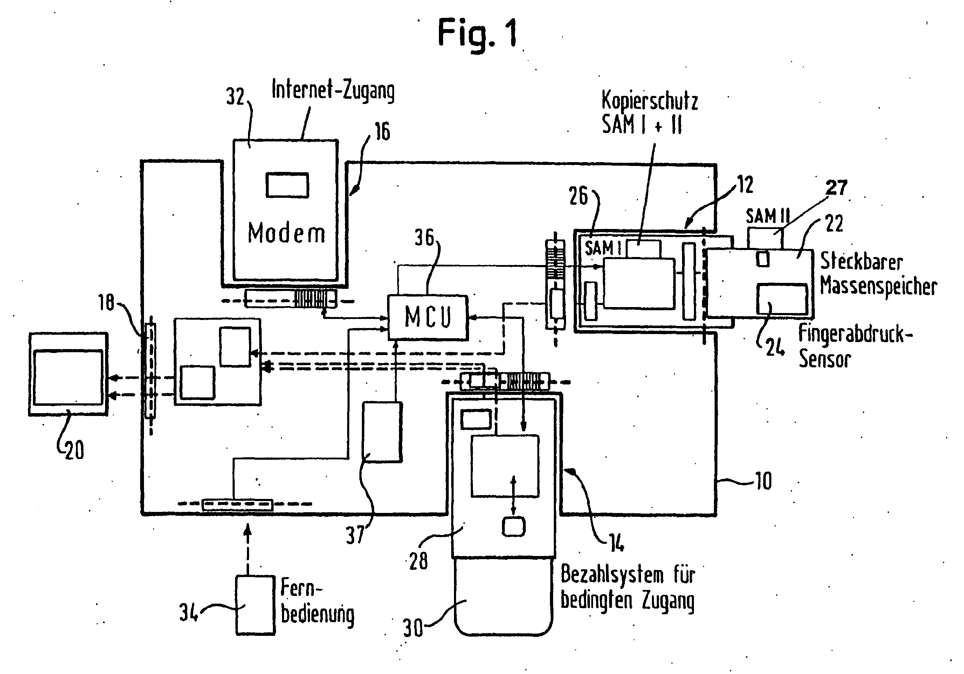

Das in Figur 1 gezeigte Blockschaltbild eines Wiedergabesystems zur Durchführung des erfindungsgemäßen Verfahrens zeigt schematisch die wesentlichen. Komponenten des Systems. Eine in einem kompakten Gehäuse untergebrachte Schnittstelleneinrichtung ist allgemein mit 10 bezeichnet und weist drei Schnittstellen 12, 14, 16 für steckbare Komponenten sowie einen Ausgangsanschluß 18 für ein Video-Ausgabegerät 20 auf. Die Schnittstelle 12 hat einen Stecksockel für einen Massenspeicher 22, der auf einer dem Benutzer zugänglichen Fläche einen Fingerabdruck-Sensor 24 aufweist. Ein erstes SAM-Modul 26 ist Bestandteil der Schnittstelle 12. Ein zweites SAM-Modul ist in dem steckbaren Massenspeicher 22 enthalten. Dieser Massenspeicher kann eine miniaturisierte Festplatte oder auch ein Halbleiterspeicher sein, beispielsweise in FLASH-Techologie.

Die Schnittstelle 14 nimmt einen Chipkartenleser 28 im Format einer PC-Karte (Abkürzung für PCMCIA-Karte) auf. Der Chipkartenleser 28 bildet in Verbindung mit einer Chipkarte 30, auch als Smart Card bezeichnet, ein Bezahlsystem für den bedingten Zugang zu einem Anbieter multimedialer Inhalte und dergleichen, insbesondere über das Internet.

An der Schnittstelle 16 wird ein Modem 32 oder ein Netzwerkadapter angeschlossen. Über das Modem 32 oder den Netzwerkadapter kann der Zugriff auf ein entferntes Netzwerk, insbesondere das Internet, erfolgen.

Am Ausgangsanschluß 18, der als SCART-Schnittstelle ausgeführt sein kann, wird ein Fernsehempfänger oder Monitor angeschlossen.

Das Wiedergabesystem kann ferner mit einer Infrarot-Fernbedienung 34 ausgestattet sein.

Ein interner Prozessor 36 beinhaltet die notwendige Funktionalität zur Entzerrung und Aufbereitung der von dem Massenspeicher 22 ausgelesenen Daten für die Wiedergabe auf dem Ausgabegerät 20. Der Prozessor 36 ist mit einem synchronisierten Zeitgeber 37 gekoppelt, der Bestandteil einer Überwachungseinrichtung ist, mittels welcher die Aufbereitung der Daten zur Wiedergabe von einem zertifizierten Zeitstempel abhängig gemacht wird, der mit den Daten auf dem Massenspeicher 22 aufgezeichnet ist.

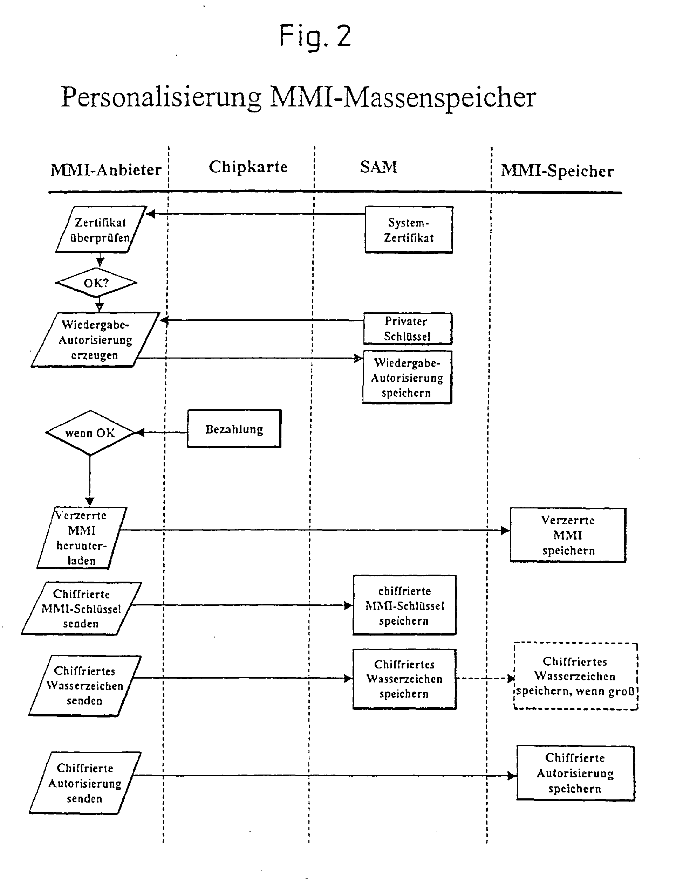

Das erfindungsgemäße Verfahren ist in den Diagrammen der Figuren 2, 3 und 4 dargestellt. Es besteht im wesentlichen aus drei Stufen. In der ersten, in Figur 2 dargestellten Stufe des Verfahrens erfolgt eine Personalisierung der Daten im Massenspeicher. Der Vorgang wird mit der Übersendung eines System-Zertifikats zum Anbieter der Daten begonnen. Bei den Daten handelt es sich insbesondere um multimediale Informationen, abgekürzt als MMI. Durch das Systemzertifikat weist sich das Wiedergabesystem beim MMI-Anbieter als geeignetes System aus. Seitens des MMI-Anbieters wird dann aus dem SAM-Modul des Wiedergabesystems ein privater Schlüssel empfangen, um einen Wiedergabe-Autorisierungscode zu erzeugen. Bei dem privaten Schlüssel kann es sich um einen persönlichen Identitätscode oder auch um vom Fingerabdruck-Sensor 24 abgeleitete komprimierte Daten, oder eine Kombination derselben, handeln. Der Wiedergabe-Autorisierungscode wird dann auf dem SAM-Modul gespeichert.

Anschließend erfolgt mittels des Bezahlsystems 28, 30, die Bezahlung, woraufhin die MMI-Daten in verzerrter Form heruntergeladen und auf dem MMI-Massenspeicher 22 gespeichert werden. Anschließend werden die zur Entzerrung der MMI-Daten benötigten MMI-Schlüssel in chiffrierter Form zum SAM-Modul übertragen und dort gespeichert. Ferner wird vom MMI-Anbieter ein chiffriertes Wasserzeichen gesendet, das im SAM-Modul gespeichert werden kann, wenn der Umfang der entsprechenden Daten vergleichsweise gering ist; andernfalls erfolgt die Speicherung im Massenspeicher. Optional wird mit den MMI-Daten ein zertifizierter Zeitstempel gesendet und auf dem Massenspeicher 22 aufgezeichnet.

Als letzter Schritt der ersten Verfahrensstufe wird vom MMI-Anbieter ein chiffrierter Autorisierungscode gesendet, der im MMI-Massenspeicher zusammen mit den MMI-Daten gespeichert wird.

Wenn in den privaten Schlüssel die durch den Fingerabdruck-Sensor abgegebenen Daten eingehen, können diese durch den im Massenspeicher 22 integrierten SAM-Modul ver- oder bearbeitet werden.

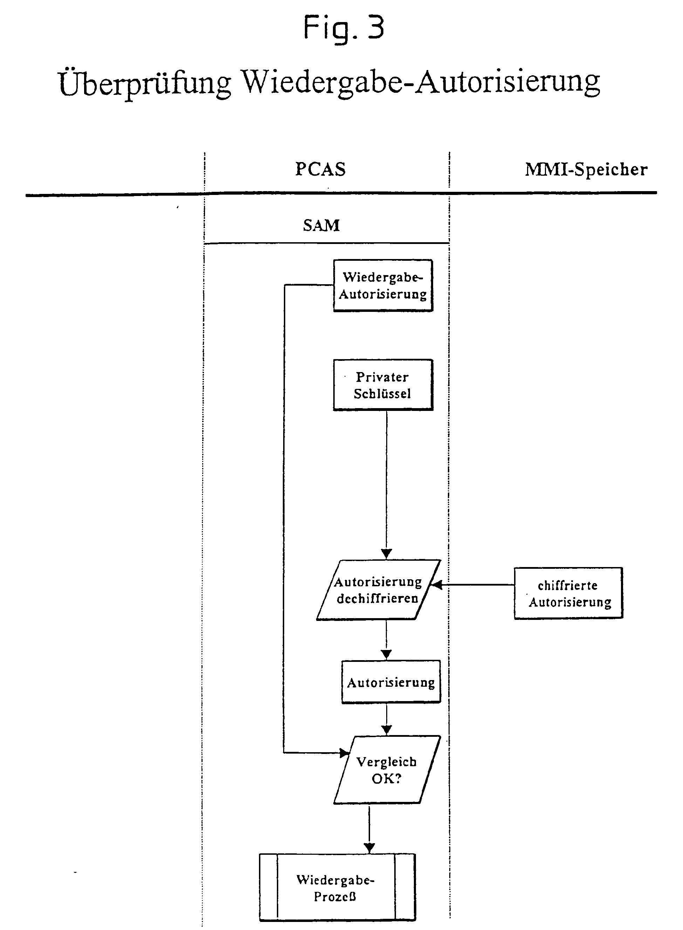

Die in Figur 3 gezeigte Verfahrensstufe betrifft die Überprüfung der Wiedergabe-Autorisierung. In dem SAM-Modul wird dazu der aus dem Massenspeicher gelesene chiffrierte Autorisierungscode mittels des privaten Schlüssels dechiffriert; der so zurückgewonnene Autorisierungscode wird dann mit dem auf dem SAM-Modul gespeicherten Autorisierungscode verglichen. Bei übereinstimmenden Autorisierungscodes wird der Wiedergabeprozeß freigegeben.

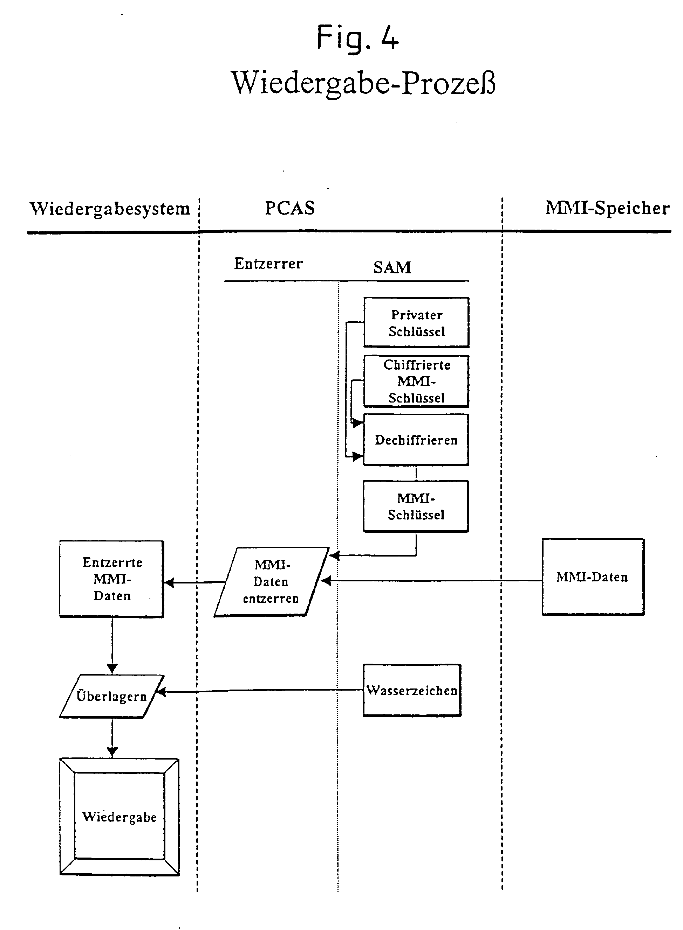

Bei dem in Figur 4 gezeigten Wiedergabe-Prozeß wird zunächst im SAM-Modul der MMI-Schlüssel mittels des privaten Schlüssels dechiffriert. Dann werden die MMI-Daten aus dem Massenspeicher ausgelesen und mittels des dechiffrierten MMI-Schlüssels entzerrt. Die entzerrten MMI-Daten werden dann mit dem persönlichen Logo bzw. Wasserzeichen überlagert und an das Ausgabegerät abgegeben.

Durch den optional mit den MMI-Daten aufgezeichneten zertifizierten Zeitstempel kann die zugelassene Wiedergabe der Daten zeitlich befristet werden.

## Patentansprüche

1. Verfahren zur Sicherung von Daten in einem tragbaren Massen-speicher (22) gegen unautorisierte Vervielfältigung, insbesondere zum Schutz von multimedialen Informationen und Software, **dadurch gekennzeichnet, daß**:
a) die Daten in dem Massenspeicher (22) in verzerrter Form gespeichert werden;
b) in einem Wiedergabesystem für die Daten wenigstens ein persönliches Modul für gesicherten Zugriff (27), nachfolgend als SAM-Modul bezeichnet, verwendet wird, auf dem ein persönlicher Identitätscode des autorisierten Benutzers gespeichert ist;
c) wenigstens ein zur Entzerrung der Daten benötigter Entzerrungsschlüssel auf dem SAM-Modul (27) des autorisierten Benutzers gespeichert wird;
d) den Daten ein Autorisierungs-Code zugeordnet wird, der auf dem SAM-Modul (27) abgelegt wird;
e) auf dem SAM-Modul (27) ein mittels des persönlichen Identitätscodes verschlüsselter Autorisierungscode gebildet wird;
f) der verschlüsselte Autorisierungscode auf dem Massenspeicher (22) abgelegt wird;
g) vor einer Wiedergabe der Daten der verschlüsselte Autorisierungscode mittels des persönlichen Identitätscodes vom SAM-Modul (27) entschlüsselt wird;
h) der entschlüsselte Autorisierungscode mit dem auf dem SAM-Modul (27) abgelegten Autorisierungscode verglichen wird und die Entzerrung der vom Massenspeicher (22) ausgelesenen Daten mittels des Entzerrungsschlüssels nur bei übereinstimmenden Autorisierungscodes freigegeben wird.

2. Verfahren nach Anspruch 1, **dadurch gekennzeichnet, daß** vor dem Erwerb der Daten von einem Anbieter ein System-Zertifikat vom SAM-Modul zum Anbieter gesendet und von diesem überprüft wird.

3. Verfahren nach Anspruch 1 oder 2, **dadurch gekennzeichnet, daß** für die gesicherte Übertragung des Autorisierungscodes zum SAM-Modul des autorisierten Benutzers ein Sitzungsschlüssel verwendet wird.

4. Verfahren nach einem der vorstehenden Ansprüche, **dadurch gekennzeichnet, daß** zur Personalisierung der Daten auf dem Massenspeicher (22) eine Kennzeichnung aus persönlichen Merkmalen des autorisierten Benutzers gebildet und mit den Daten in solcher Weise verknüpft wird, daß die Daten nur mit der Kennzeichnung ausgegeben werden können.

5. Verfahren nach einem der vorstehenden Ansprüche, **dadurch gekennzeichnet, daß** der persönliche Identitätscode des autorisierten Benutzers zumindest teilweise aus von einem Fingerabdruck-Sensor (24) gelieferten Daten gebildet wird.

6. Verfahren nach einem der vorstehenden Ansprüche, **dadurch gekennzeichnet, daß** der Massenspeicher (22) in einem an einem Wiedergabesystem steckbaren Modul angeordnet ist.

7. Verfahren nach den Ansprüchen 5 und 6, **dadurch gekennzeichnet, daß** der Fingerabdruck-Sensor (24) auf einer Fläche des steckbaren Moduls angeordnet ist.

8. Verfahren nach einem der vorstehenden Ansprüche, **dadurch gekennzeichnet, daß** mittels eines ersten, im Wiedergabesystem angeordneten SAM-Moduls (26) die Kommunikation und Transaktion mit dem Anbieter der Daten und mittels eines zweiten, dem Massenspeicher (22) zugeordneten SAM-Moduls (27) die Personalisierung der Daten abgewickelt werden.

9. Verfahren nach den Ansprüchen 6 und 8, **dadurch gekennzeichnet, daß** das dem Massenspeicher (22) zugeordnete SAM-Modul (27) in das steckbare Modul integriert ist.

10. Verfahren nach einem der vorstehenden Ansprüche, **dadurch gekennzeichnet, daß** der Massenspeicher (22) als miniaturisierte Festplatte ausgebildet ist.

11. Verfahren nach einem der Ansprüche 1 bis 9, **dadurch gekennzeichnet, daß** der Massenspeicher (22) als Flash-Halbleiterspeicher ausgebildet ist.

12. Verfahren nach Anspruch 11, **dadurch gekennzeichnet, daß** der Flash-Halbleiterspeicher entfernbar in einem am Wiedergabesystem steckbaren Schnittstellen-Modul angeordnet ist.

13. Verfahren nach Anspruch 12, **dadurch gekennzeichnet, daß** das Schnittstellen-Modul einen SAM-Kartenleser enthält.

14. Verfahren nach einem der vorstehenden Ansprüche, **dadurch gekennzeichnet, daß** zum Erwerb der Daten eine Kommunikation und Transaktion mit einem Anbieter per Fernzugriff auf ein Netzwerk erfolgt.

15. Verfahren nach Anspruch 14, **dadurch gekennzeichnet, daß** die Transaktion mit dem Anbieter unter Verwendung eines in das Wiedergabesystem einsteckbaren Kartenleser-Moduls erfolgt, das einen Chipkartenleser (28) und einen das wenigstens eine SAM-Modul (26) aufnehmenden SAM-Kartenleser beinhaltet.

16. Verfahren nach einem der vorstehenden Ansprüche, **dadurch gekennzeichnet, daß** der Entzerrungsschlüssel seinerseits mit auf dem SAM-Modul gespeicherten persönlichen Daten chiffriert und bei der Wiedergabe mit diesen Daten dechiffriert wird.

17. Verfahren nach einem der vorstehenden Ansprüche, **dadurch gekennzeichnet, daß** ein zertifizierter Zeitstempel erzeugt und mit den Daten auf dem Massenspeicher (22) gespeichert wird.

18. Wiedergabesystem für die Durchführung des Verfahrens nach einem der vorstehenden Ansprüche, **gekennzeichnet durch**:
- ein Lesemodul zur Aufnahme des Massenspeichers (22);
- einen Kartenleser (28) für das SAM-Modul;
- eine Daten-Aufbereitungselektronik zum Entzerren der aus dem Massenspeicher (22) gelesenen Daten; und
- ein Ausgabegerät (20) für die entzerrten Daten.

19. Wiedergabesystem nach Anspruch 16, ferner **gekennzeichnet durch** ein auf einem Chipkartenleser (28) basierendes Bezahlsystem für bedingten Zugang zu einem Datenanbieter über ein entferntes Netzwerk.

20. Wiedergabesystem nach Anspruch 17, **dadurch gekennzeichnet, daß** der Chipkartenleser (28) als steckbare PC-Karte im PCMCIA-Format ausgebildet ist.

21. Wiedergabesystem nach einem der Ansprüche 18 bis 20, **dadurch gekennzeichnet, daß** eine Überwachungseinrichtung vorgesehen ist, die einen mit den Daten vom Massenspeicher (22) gelesenen zertifizierten Zeitstempel auswertet.

## Claims

1. A method of securing data in a portable mass storage (22) against unauthorized copying, in particular for the protection of multimedia information and software, **characterized in that**:
a) the data is stored in the mass storage (22) in a scrambled form;
b) in a replay system for the data, at least one personal module for secured access (27), in the following referred to as SAM module, is used which has stored thereon a personal identity code of the authorized user;
c) at least one descrambling key required for descrambling the data is stored on the SAM module (27) of the authorized user;
d) an authorization code is assigned to the data and is stored on the SAM module (27);
e) an authorization code encoded by means of the personal identity code is formed on the SAM module (27);
f) the encoded authorization code is stored on the mass storage (22);
g) prior to a replay of the data, the encoded authorization code is decoded by the SAM module (27) by means of the personal identity code;
h) the decoded authorization code is compared with the authorization code stored on the SAM module (27), and descrambling by means of the descrambling key of the data read out of the mass storage (22) is enabled only when the authorization codes are identical.

2. The method according to claim 1, **characterized in that** prior to the purchase of the data from a provider, a system certificate is transmitted from the SAM module to the provider and verified by the latter.

3. The method according to claim 1 or 2, **characterized in that** a session key is used for the secured transfer of the authorization code to the SAM module of the authorized user.

4. The method according to any of the preceding claims, **characterized in that** for personalizing the data on the mass storage (22) an identification consisting of personal features of the authorized user is formed and linked with the data in such a manner that the data can be output only with the identification.

5. The method according to any of the preceding claims, **characterized in that** the personal identity code of the authorized user is formed at least in part from data supplied by a fingerprint sensor (24).

6. The method according to any of the preceding claims, **characterized in that** the mass storage (22) is arranged in a module adapted to be plugged into a replay system.

7. The method according to claims 5 and 6, **characterized in that** the fingerprint sensor (24) is arranged on a surface of the plug-in type module.

8. The method according to any of the preceding claims, **characterized in that** the communication and transaction with the provider of the data is conducted by means of a first SAM module (26) arranged in the replay system, and the personalization of the data is carried out by means of a second SAM module (27) assigned to the mass storage (22).

9. The method according to claims 6 and 8, **characterized in that** the SAM module (27) assigned to the mass storage (22) is integrated in the plug-in type module.

10. The method according to any of the preceding claims, **characterized in that** the mass storage (22) is configured as a miniaturized hard disk.

11. The method according to any of claims 1 to 9, **characterized in that** the mass storage (22) is configured as flash semiconductor storage.

12. The method according to claim 11, **characterized in that** the flash semiconductor storage is removably arranged in an interface module adapted to be plugged into the replay system.

13. The method according to claim 12, **characterized in that** the interface module comprises a SAM card reader.

14. The method according to any of the preceding claims, **characterized in that** for purchasing the data a communication and transaction with a provider is effected by means of a remote access to a network.

15. The method according to claim 14, **characterized in that** the transaction with the provider is effected using a card reader module which is adapted to be plugged into the replay system and which includes a chip card reader (28) and a SAM card reader accommodating the at least one SAM module (26).

16. The method according to any of the preceding claims, **characterized in that** the descrambling key is for its part encrypted with personal data stored on the SAM module and is decrypted with such data during replay.

17. The method according to any of the preceding claims, **characterized in that** a certified time stamp is generated and stored with the data on the mass storage (22).

18. A replay system for performing the method according to any of the preceding claims, **characterized by**:
- a read module for accommodating the mass storage (22);
- a card reader (28) for the SAM module;
- a data conditioning electronics for descrambling the data read out of the mass storage (22); and
- an output device (20) for the descrambled data.

19. The replay system according to claim 18, further **characterized by** a payment system based on a chip card reader (28), for conditional access to a data provider via a remote network.

20. The replay system according to claim 19, **characterized in that** the chip card reader (28) is configured as a plug-in type PC card in the PCMCIA format.

21. The replay system according to any of claims 18 to 20, **characterized in that** a monitoring device is provided which evaluates a certified time stamp read out of the mass storage (22) with the data.

## Revendications

1. Procédé de sauvegarde de données dans une mémoire de masse (22) portative à l'encontre d'une reproduction non autorisée, en particulier pour la protection d'informations et de logiciels multimédia, **caractérisé en ce que**
a) les données sont mémorisées dans la mémoire de masse (22) sous forme brouillée ;
b) dans un système de restitution pour les données est mémorisé au moins un module personnel pour l'accès sécurisé (27), désigné ci-après module SAM, sur lequel est mémorisé un code d'identité personnel de l'utilisateur autorisé ;
c) au moins une clé de débrouillage nécessitée pour le débrouillage des données est mémorisée sur le module SAM (27) de l'utilisateur autorisé ;
d) aux données est associé un code d'autorisation qui est stocké sur le module SAM (27) ;
e) sur le module SAM (27) est formé un code d'autorisation crypté au moyen du code d'identité personnel ;
f) le code d'autorisation crypté est stocké sur la mémoire de masse (22) ;
g) avant une restitution des données, le code d'autorisation crypté est décrypté au moyen du code d'identité personnel du module SAM (27) ;
h) le code d'autorisation décrypté est comparé au code d'autorisation stocké sur le module SAM (27), et le débrouillage des données lues depuis la mémoire de masse (22) n'est libéré au moyen de la clé de débrouillage qu'en cas de concordance des codes d'autorisation.

2. Procédé selon la revendication 1, **caractérisé en ce qu'**avant l'acquisition des données par un fournisseur, un certificat de système est envoyé depuis le module SAM au fournisseur et vérifié par celui-ci.

3. Procédé selon la revendication 1 ou 2, **caractérisé en ce qu'**une clé de séance est utilisée pour la transmission sécurisée du code d'autorisation vers le module SAM de l'utilisateur autorisé.

4. Procédé selon l'une des revendications précédentes, **caractérisé en ce que** pour personnaliser les données sur la mémoire de masse (22), on crée une identification consistant en des caractéristiques personnelles de l'utilisateur autorisé et on établit un lien avec les données de telle sorte que les données ne peuvent être fournies qu'avec l'identification.

5. Procédé selon l'une des revendications précédentes, **caractérisé en ce que** le code d'identité personnel de l'utilisateur autorisé est formé au moins partiellement par des données fournies par un capteur d'empreintes digitales (24).

6. Procédé selon l'une des revendications précédentes, **caractérisé en ce que** la mémoire de masse (22) est agencée dans un module enfichable dans un système de restitution.

7. Procédé selon les revendications 5 et 6, **caractérisé en ce que** le capteur d'empreintes digitales (24) est agencé sur une surface du module enfichable.

8. Procédé selon l'une des revendications précédentes, **caractérisé en ce que** la communication et la transaction avec le fournisseur des données sont exécutées au moyen d'un premier module SAM (26) agencé dans le système de restitution, et la personnalisation des données est effectuée au moyen d'un deuxième module SAM (27) associé à la mémoire de masse.

9. Procédé selon les revendications 6 et 8, **caractérisé en ce que** le module SAM (27) associé à la mémoire de masse (22) est intégré au module enfichable.

10. Procédé selon l'une des revendications précédentes, **caractérisé en ce que** la mémoire de masse (22) est réalisée sous forme de disque dur miniaturisé.

11. Procédé selon l'une des revendications 1 à 9, **caractérisé en ce que** la mémoire de masse (22) est réalisée sous forme de mémoire flash à semiconducteurs.

12. Procédé selon la revendication 11, **caractérisé en ce que** la mémoire flash à semiconducteurs est agencée de manière amovible dans un module d'interface enfichable sur le système de restitution.

13. Procédé selon la revendication 12, **caractérisé en ce que** le module d'interface contient un lecteur de carte SAM.

14. Procédé selon l'une des revendications précédentes, **caractérisé en ce que** pour acquérir les données, une communication et une transaction avec le fournisseur a lieu par accès à distance sur un réseau.

15. Procédé selon la revendication 14, **caractérisé en ce que** la transaction avec le fournisseur a lieu en utilisant un module de lecteur de carte enfichable dans le système de restitution, lequel contient un lecteur de carte à puce (28) et un lecteur de carte SAM recevant ledit au moins un module SAM (26).

16. Procédé selon l'une des revendications précédentes, **caractérisé en ce que** la clé de débrouillage est de sa part chiffrée avec des données personnelles mémorisées sur le module SAM et déchiffrée avec ces données lors de la restitution.

17. Procédé selon l'une des revendications précédentes, **caractérisé en ce qu'**une estampille horodatée certifiée est produite et mémorisée avec les données sur la mémoire de masse (22).

18. Système de restitution pour la mise en oeuvre du procédé selon l'une des revendications précédentes, **caractérisé par** :
- un module de lecture destiné à recevoir la mémoire de masse (22) ;
- un lecteur de carte (28) pour le module SAM ;
- un système électronique de traitement de données pour débrouiller les données lues depuis la mémoire de masse (22) ; et
- une unité de sortie (20) pour les données débrouillées.

19. Système de restitution selon la revendication 18, **caractérisé en outre par** un système de paiement se basant sur un lecteur de carte à puce (28) pour l'accès conditionnel à un fournisseur de données via un réseau à distance.

20. Système de restitution selon la revendication 19, **caractérisé en ce que** le lecteur de carte à puce (28) est réalisé sous forme de carte d'ordinateur enfichable de format PCMCIA.

21. Système de restitution selon l'une des revendications 18 à 20, **caractérisé en ce qu'**il est prévu un système de surveillance qui évalue une estampille horodatée certifiée lue depuis la mémoire de masse (22) avec les données.
